# EUROPEAN PATENT SPECIFICATION

(11) **EP 1 668 308 B1**
(45) Date of publication and mention of the grant of the patent: **04.08.2010**
(21) Application number: 04762875.5
(22) Date of filing: 28.09.2004
(51) Int. Cl.: F41H 5/04, C04B 38/00

(54) **AN ASSEMBLY FOR PROTECTION AGAINST AN EXPLOSION**
ANORDNUNG ZUM SCHUTZ GEGEN EINE EXPLOSION
ENSEMBLE SERVANT A ASSURER UNE PROTECTION CONTRE LES EXPLOSIONS

(30) Priority: 29.09.2003 DK 200301410
(43) Date of publication of application: 14.06.2006
(73) Proprietor: Demex Rådgivende Ingeniører A/S, 3400 Allerød (DK)
(72) Inventor: LAURITZEN, Erik, K., DK-2000 Frederiksberg F (DK)
(74) Representative: Thierry-Carstensen, Ole Jean
(86) International application number: PCT/DK2004/000655
(87) International publication number: WO 2005/031244

(56) References cited:
- WO-A-00/62007
- WO-A-01/72663
- FR-A- 2 827 375
- US-A- 4 415 632

## Description

### Technical Field

The invention relates to an assembly for protection against an explosion, said assembly including a substantially plate-shaped multi-ply element formed by two outer walls and at least one intermediate layer of a ceramic material according to the preamble of claim 1. FR 2827375 discloses such an assembly.

### Background Art

It is known to protect objects, such as tanks and other military vehicles, against the effects of explosions, such as when driving over a mine. Such a protection is typically based on heavy steel plates, carbon fibre plates, polyethylene fibre plates and plates made of ceramics and composite materials. Particular types of vehicles have been developed, said vehicles including a particularly structured plating for reflecting blast waves and for reducing the effect of land mines and UXO, viz. unexploded ordenance.

For instance EP 0 240 996 discloses a shield for protection against heavy explosions. This shield is formed by an element including a plurality of layers, where the outer layers can be made of steel, and where one or more of the intermediate layers can be made of rock wool or the like materials, such as ceramic fibres or fibres of a synthetic material.

The use of pure, heavy steel plates has the effect that said plates ensure a relatively good protection, but at the same time said plates suffer from the draw-back that they are disadvantageously heavy.

### Disclosure of Invention

The object of the invention is to provide an assembly ensuring a good protection of the staff against explosions while simultaneously presenting a relatively low weight.

The above object is according to the invention obtained by at least one layer of a particle-shaped material being a ceramic material of a density in the range of approximately 0.3 to 1.5 g/cm³, each of the particles having a pore diameter in the range of approximately 20 to 120 µ and a physical size in the range of 0.5 to 10 mm.

The resulting assembly is relatively light and ensures a comparatively good protection against explosions. The ceramic material in question can be made of AlO₂, MgO and SIO₂ as well as mixtures or compositions thereof. Such a ceramic material turned out to be particularly energy-absorbing due to the fact that the energy of a blast wave resulting from an explosion hits the assembly and is accumulated therein because the ceramic material is caused to move. The latter movement of the ceramic material is caused by the individual particles sliding against one another and presenting such a fragile state that said ceramic material is crushed into a fine powder while being heated. As a result of the latter accumulation of energy and the continued movement of the blast wave into the vehicle in question in combination with the deformation of the remaining structural elements of the vehicle as well as the fact that the vehicle per se is raised or moved, the persons present inside such a vehicle do very likely survive such an explosion. A suitable dimensioning of the assembly in question as well as a suitable selection of wall materials, such as fibre-reinforced rubber material according to the invention, has the effect that the assembly can absorb at least 25% of the total energy optionally hitting such a vehicle.

According to the invention, the ceramic material may advantageously present a crystal size in the range of approximately 1 to approximately 20 µ.

In addition, the ceramic material may according to the invention advantageously present a density in the range of approximately 0.5 to approximately 0.95 g/cm³, and preferably in the range of 0.6 to 0.8 g/cm³.

The particles of the ceramic material may according to the invention also advantageously present a pore diameter in the range of approximately 30 to approximately 80 µ, and preferably in the range of approximately 45 to approximately 65 µ.

Finally according to the invention, the particles of the ceramic material may advantageously present a physical size in the range of approximately 1 to approximately 7 mm, and preferably in the range of approximately 2 to approximately 5 mm.

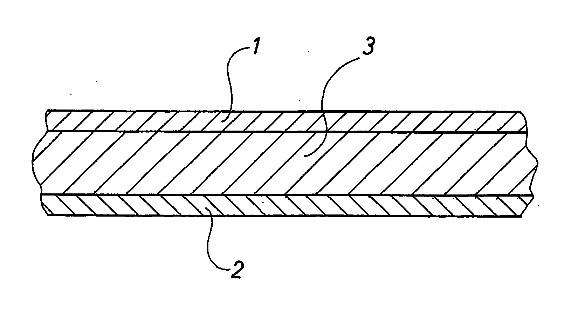

### Brief Description of the Drawing

The invention is explained in detail below with reference to the drawing showing a cross sectional view of an assembly according to the invention.

### Best Mode for Carrying out the Invention

The assembly according to the invention shown in the drawing includes three,layers, viz. a top outer wall 1 and a bottom outer wall 2 as well as an intermediate layer of ceramic material. The outer layers are made of a fibre-reinforced rubber material, and the intermediate layer includes a ceramic material presenting a density in the range of approximately 0.3 to approximately 1.5 g/cm³, a pore diameter in the range of approximately 20 to 120 µ and a physical size in the range of 0.5 to 10 mm. The ceramic material is of a crystal size in the range of approximately 1 to approximately 20 µ, it presents particularly advantageously a density in the range of approximately 0.5 to 0.95 g/cm³ and preferably in the range of 0.6 to 0.8 g/cm³, a pore diameter advantageously in the range of approximately 30 to approximately 80 µ and preferably in the range of approximately 45 to approximately 65 µ as well as finally a physical size advantageously in the range of approximately 1 to approximately 7 mm and preferably in the range of approximately 2 to approximately 5 mm.

The assembly is closed at the sides in such a manner that a flat closed pocket is formed between the outer walls 1 and 2, and the ceramic material is placed in said pocket in a suitably compressed state by means of pneumatic or hydraulic force with the result that the walls appear as a compact unit. The assembly is formed and further shaped such that it is easy to mount on a vehicle in a detachable manner by means of strong and quickly releasable devices, such as drilling pins, mechanical locking devices, special purpose glue, wire arrangements etc.

According to a suitable embodiment, the individual layers of the multi-ply assembly present suitably the following thicknesses: the outer walls 1 and 2 are approximately 2 to 5 mm and the intermediate layer is approximately 50 to 200 mm. The outer walls are made of a steel or plastic-reinforced rubber material. The fibres can in particular be so-called Kevlar or amid fibres. According to yet another possibility, the outer walls 1 and 2 can be made of a composite material.

The particle-shaped material is a product sold under the Trade Name Hydro feating Calatlists by the company Haldor Topsøe A/S. It is a porous, ceramic material resulting from a granulation, a pressing, an extrusion or corresponding shaping methods.

## Claims

1. An assembly for protection against an explosion, said assembly including a substantially plate-shaped multi-ply element formed by two outer walls (1, 2) and at least one intermediate layer (3) of a ceramic material, **characterised in that** said at least one intermediate layer is a particle-shaped ceramic material presenting a density in the range of approximately 0.3 to 1.5 g/cm³, each of the particles having a pore diameter in the range of approximately 20 to 120 µ and a physical size in the range of approximately 0.5 to 10 mm.

2. An assembly According to claim 1, **characterised in that** the ceramic material presents a crystal size in the range of approximately 1 to 20 µ.

3. An assembly according to claim 1 or 2, **characterised in that** the ceramic material presents a density in the range of approximately 0.5 to 0.95 g/cm³ and preferably in the range of approximately 0.6 to 0.8 g/cm³.

4. An assembly according to claim 1,2 or 3, **characterised in that** the particles of the ceramic material present a pore diameter in the range of approximately 30 to 80 µ and preferably in the range of approximately 45 to 65 µ.

5. An assembly according to claim 1,2, 3 or 4, **characterised in that** the particles of the ceramic material presents a physical size in the range of approximately 1 to 7 mm and preferably in the range of approximately 2 to 5 mm.

6. An assembly according to one or more of the preceding claims 1 to 5, **characterised in that** the outer walls (1, 2) are made of a metal material.

7. An assembly according to one or more of the preceding claims 1 to 6, **characterised in that** the outer walls (1, 2) are made of a fibre-reinforced rubber material.

## Patentansprüche

1. Anordnung zum Schutz vor einer Explosion, wobei die Anordnung ein im wesentlichen plattenförmiges mehrlagiges Element einschließt, das durch zwei äußere Wände (1, 2) und mindestens einer Zwischenlage (3) eines keramischen Materials gebildet wird, **dadurch gekennzeichnet, dass** die mindestens eine Zwischenlage ein partikelförmiges keramisches Material ist, das eine Dichte im Bereich von ungefähr 0,3 bis 1,5 g/cm³ zeigt, wobei jeder der Partikel einen Porendurchmesser im Bereich von ungefähr 20 bis 120 µ und eine physikalische Größe im Bereich von ungefähr 0,5 bis 10 mm aufweist.

2. Anordnung nach Anspruch 1, **dadurch gekennzeichnet, dass** das keramische Material eine Kristallgröße im Bereich von ungefähr 1 bis 20 µ zeigt.

3. Anordnung nach Anspruch 1 oder 2, **dadurch gekennzeichnet, dass** das keramische Material eine Dichte im Bereich von ungefähr 0,5 bis 0,95 g/cm³ und bevorzugt im Bereich von ungefähr 0,6 bis 0,8 g/cm³ zeigt.

4. Anordnung nach Anspruch 1, 2 oder 3, **dadurch gekennzeichnet, dass** die Partikel des keramischen Materials einen Porendurchmesser im Bereich von ungefähr 30 bis 80 µ und bevorzugt im Bereich von ungefähr 45 bis 65 µ zeigen.

5. Anordnung nach Anspruch 1, 2, 3 oder 4, **dadurch gekennzeichnet, dass** die Partikel des keramischen Materials eine physikalische Größe im Bereich von ungefähr 1 bis 7 mm und bevorzugt im Bereich von ungefähr 2 bis 5 mm zeigen.

6. Anordnung nach einem der voranstehenden Ansprüche 1 bis 5, **dadurch gekennzeichnet, dass** die äußeren Wände (1, 2) aus einem metallischen Material gebildet sind.

7. Anordnung nach einem der voranstehenden Ansprüche 1 bis 6, **dadurch gekennzeichnet, dass** die äußeren Wände (1, 2) aus einem faserverstärkten Gummimaterial gebildet sind.

## Revendications

1. Ensemble de protection contre une explosion, ledit ensemble comprenant un élément multi-couche sensiblement en forme de plaque, formé de deux parois externes (1, 2) et d'au moins une couche intermédiaire (3) d'un matériau céramique, **caractérisé en ce que** ladite au moins une couche intermédiaire est un matériau céramique en forme de particules présentant une masse volumique dans la plage d'environ 0,3 à 1,5 g/cm³, chacune des particules ayant un diamètre de pore dans la plage d'environ 20 à 120 µm et une taille physique dans la plage d'environ 0,5 à 10 mm.

2. Ensemble selon la revendication 1, **caractérisé en ce que** le matériau céramique présente une taille de cristal dans la plage d'environ 1 à 20 µm.

3. Ensemble selon la revendication 1 ou 2, **caractérisé en ce que** le matériau céramique présente une masse volumique dans la plage d'environ 0,5 à 0,95 g/cm³ et, de préférence, dans la plage d'environ 0,6 à 0,8 g/cm³.

4. Ensemble selon la revendication 1, 2 ou 3, **caractérisé en ce que** les particules du matériau céramique présentent un diamètre de pore dans la plage d'environ 30 à 80 µm et, de préférence, dans la plage d'environ 45 à 65 µm.

5. Ensemble selon la revendication 1, 2, 3 ou 4, **caractérisé en ce que** les particules du matériau céramique présentent une taille physique dans la plage d'environ 1 à 7 mm et, de préférence, dans la plage d'environ 2 à 5 mm.

6. Ensemble selon une ou plusieurs des revendications précédentes 1 à 5, **caractérisé en ce que** les parois externes (1, 2) sont constituées d'un matériau métallique.

7. Ensemble selon une ou plusieurs des revendications précédentes 1 à 6, **caractérisé en ce que** les parois externes (1, 2) sont constituées d'un matériau en caoutchouc renforcé par des fibres.
